# EUROPEAN PATENT APPLICATION

(11) **EP 4 765 964 A1**
(43) Date of publication of application: **24.06.2026**
(21) Application number: 25207977.7
(22) Date of filing: 10.10.2025
(51) Int. Cl.: H04W 52/02, H04W 4/80

(54) **PROXIMITY-AWARE SCANNING FOR WIRELESS DEVICE CONNECTIONS**

(30) Priority: 19.12.2024 US 202418986831
(71) Applicant: Intel Corporation, Santa Clara, CA 95052 (US)
(72) Inventor: GE, Ethan, Taipei City (TW); KAI, Chi Sheng, Taipei City (TW)
(74) Representative: Viering, Jentschura & Partner mbB Patent- und Rechtsanwälte

(57) **Abstract**

Disclosed herein are systems, devices, and apparatuses for a proximity-aware wireless scanning procedure for a wireless-enabled computing device. The proximity-aware wireless scanning procedure detects whether a user is within a predefined proximity of the computing device. Then, based on the detection, the proximity-aware wireless scanning procedure reduces, based on the user detected beyond the predefined proximity of the computing device, a frequency of a scanning procedure of a wireless communication circuitry of the computing device and increases, based on the user detected within the predefined proximity of the computing device, the frequency of the scanning procedure of the wireless communication circuitry.

## Description

### Background

In wireless communication systems, a wireless device may use a scanning mode in order to reconnect with known devices with which it has previously connected or scan for a pair with new devices with which it may establish a wireless connection. In Bluetooth systems, for example, the scanning mode may be used for reconnecting to or for discovering and pairing with new/other Bluetooth wireless devices. Typically, a wireless device is paired/reconfigured when the user is nearby the paired devices and uses the devices. Taking a personal computer (e.g., a desktop or laptop) as an example, a user may wish to pair it with a Bluetooth mouse/keyboard to operate the personal computer. However, when the user is not nearby or not actively operating the computer, there may be no need to connect the personal computer to the Bluetooth mouse/keyboard or to search for other devices. Nevertheless, in a typical wireless system that pairs with other wireless devices, such as a Bluetooth system, the scanning process may continuously scan/listen in order to reconnect to the mouse/keyboard or search for other compatible devices. Such scanning may waste resources, such as power and wireless bandwidth.

### Brief Description of the Drawings

In the drawings, like reference characters generally refer to the same parts throughout the different views. The drawings are not necessarily to scale, emphasis instead generally being placed upon illustrating exemplary principles. In the following description, various exemplary aspects are described with reference to the following drawings, in which:
FIG. 1 shows an example flow diagram of proximity-aware scanning for wireless connections to devices;
FIG. 2 illustrates an exemplary schematic drawing illustrating a device that may utilize user proximity as a basis for setting scanning properties for wireless connections to other devices; and
FIG. 3 depicts an exemplary schematic flow diagram of a method of scanning for wireless devices based on user proximity.

### Description

The following detailed description refers to the accompanying drawings that show, by way of illustration, exemplary details and features.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (*e.g.,* one, two, three, four, [...], etc., where "[...]" means that such a series may continue to any higher number). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (*e.g.,* "plural [elements]", "multiple [elements]") referring to a quantity of elements expressly refers to more than one of the said elements. For instance, the phrase "a plurality" may be understood to include a numerical quantity greater than or equal to two (*e.g.,* two, three, four, five, [...], etc., where "[...]" means that such a series may continue to any higher number).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, *e.g.,* in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, *e.g.,* any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g.,* a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint^{™}, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g.,* the transmission of radio signals) and logical transmission (*e.g.,* the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

In many wireless communication systems, a scanning mode is used to determine whether there are known or new wireless devices with which it may connect. In Bluetooth systems, for example, the scanning mode may be used for reconnecting to or for discovering and pairing with other Bluetooth wireless devices. Typically, a device is paired/reconfigured when the user is nearby the paired devices. Using a personal computer (e.g., a desktop or laptop) as an example, a user may wish to pair it with a Bluetooth mouse/keyboard when using the personal computer. However, when the user is not nearby or not using the computer, there may be no need to connect the personal computer to the Bluetooth mouse/keyboard or to search for new/other devices. Nevertheless, in a typical Bluetooth system, the scanning process may continuously scan in order to reconnect to the mouse/keyboard or search for other compatible devices. Such scanning may waste resources, such as power and wireless bandwidth.

In Bluetooth, the scanning mode occurs periodically as a background process in a laptop, for example, in order to pair or reconnect BT device. This scanning may be an active scan or a passive scan. In an active scan, advertisement/probe signals may be actively transmitted from the wireless device, asking for devices to transmit a response. In a passive scan, the device may simply listen for transmissions from wireless devices interested in establishing a connection. This scanning may be performed periodically, irrespective of whether the laptop's processor is in an active state (e.g., no matter as to whether the processor state is in a mode S0, S1, S2, S3, S4, S5, etc.) or a sleep/low-power state. When the user is not actively using the computer or when the user is not nearby the computer, this periodic scanning may be unnecessary and therefore consume unnecessary power.

As discussed in more detail below, a user-aware scanning mode may be used, where the scanning mode may be reduced/deactivated until the user is nearby or until the processor is in a predefined state (e.g., an active state or particular power state (e.g., S0, S1, etc.). In this manner, the wireless circuitry (e.g., Bluetooth) does not waste power by periodically scanning to reconnect to known devices or to discover/pair with new devices. In addition, the wireless bandwidth that would have been normally been used for scanning may be freed up for use by other devices.

For example, a proximity detection circuit may be used to detect whether a user is proximate to the device in which a wireless communication circuitry would normally perform a periodic scan for reconnecting to known devices or searching/pairing to new devices. The proximity detection circuit may include known proximity detection techniques such as wireless proximity detection (e.g., utilizing angle of arrival and/or an angle of departure measurements), camera-based detection circuits, ultrasound detection circuits, a high accuracy distance measurement (HADM), or any other circuit for detecting the proximity of a user to a computing device. When the user approaches the computing device (e.g., is within a predefined proximity to the computing device), the wireless scan mode may be enabled. When the user moves away from the computing device (e.g., is outside a predefined proximity to the computing device), the wireless scan mode may be disabled. An example of the predefined proximity may be about half a meter or one meter. As should be understood, any type of predefined criterion or criteria may be used for determining whether a user is within/outside the predefined proximity.

In addition, other types of criteria may be used, alone or in combination with proximity detection, for determining whether to disable/enable wireless scanning. For example, a processor state of the computing device may be used as a basis for determining whether to disable/enable/modify its wireless scanning. As an example, a computing device might have an application/circuit/platform processor that operates in various states (e.g., a platform-level power mode), where various states may include a working state (e.g., S0), a low-latency-standby sleep state (e.g., S1), processor-context-lost sleep state (e.g., S2), a suspend-to-random-access-memory sleep state (e.g., S3), a suspend-to-disk hibernate state (e.g., S4), or a soft-off state (e.g., S5). The scanning mode may be modified based on the power state, so that, for example, in mode S0 the scanning mode is enabled, in modes S3-S5, the scanning mode is disabled, and in in modes S1-S2, the scanning mode has a very long period. As should be appreciated, these power states and modifications to the scanning mode is merely exemplary, and a computing device/platform may have any number of power states and the scanning mode may use any type of predefined criterion/criteria to determine the modifications to the scanning mode.

As noted above, the scanning mode properties may be modified by enabling or disabling it entirely, or by adjusting the scan interval, the scan window, power level, channels used, or any other property of the scanning mode.

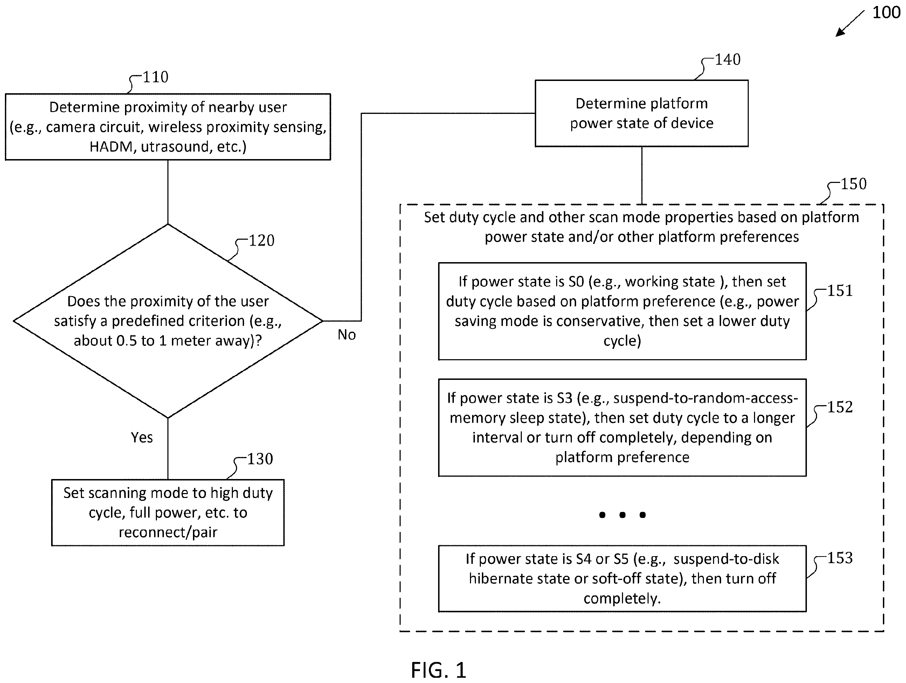

FIG. 1 shows an example of a proximity-aware system 100 that may adjust properties of a wireless communication circuit's scanning mode based on the proximity of a user to the computing device in which the wireless communication circuit is located. The proximity-aware system 100 may, in 110, determine the proximity of a user (e.g., distance) to the computing device. As noted above, any type of proximity detection circuit may be used, such as wireless proximity sensing, camera-based detection circuits, ultrasound detection circuits, HADM, etc. Based on one or more predefined criterion, in 120, the proximity-aware system 100 may determine whether the proximity of the user satisfies a predefined criterion. For example, whether the user is about 0.5 to 1.0 meter away, whether the user is recognized as a known user, whether the user is walking toward the computing device or away from the computing device, etc. If the one or more criterion is satisfied, the proximity-aware system 100 may, in 130, set the frequency of the wireless scanning mode to a normal setting (e.g., increasing or setting a high duty cycle) and set other settings to normal (e.g., normal/high power, normal channel usage, etc.) for reconnecting/pairing other wireless devices.

If the one or more criterion is not satisfied, the proximity-aware system 100 may, in 140, determine the platform power state of the device and may, in 150, reduce the scanning mode by reducing the frequency of scanning (e.g., reducing the duty cycle) or disabling it entirely and/or modifying other properties of the scanning mode to reduce power consumption and/or wireless resources (e.g., increased scan interval, narrower scan window, lower power level, fewer channels used, etc.). As shown in box 150 of FIG. 1, the proximity-aware system 100 may use platform power state and/or other platform preferences to set the properties of the scanning mode. For example, in 151, if the power state is S0 (e.g., working state ), then the proximity-aware system 100 may set the frequency (e.g., duty cycle) based on platform preference (e.g., if the power saving mode is conservative, then set a lower duty cycle as compared to other power saving modes). As another example, in 152, if the power state is S3 (e.g., suspend-to-random-access-memory sleep state), then the proximity-aware system 100 may set duty cycle to a longer interval or turn off completely, depending on platform preference. As another example, in 153, if the power state is S4 or S5 (e.g., suspend-to-disk hibernate state or soft-off state), the proximity-aware system 100 may turn off the communication circuit completely. As should be appreciated, these are merely examples, and any number of platform power states and/or platform preferences may be used by the proximity-aware system 100 as a basis for setting the scanning mode properties.

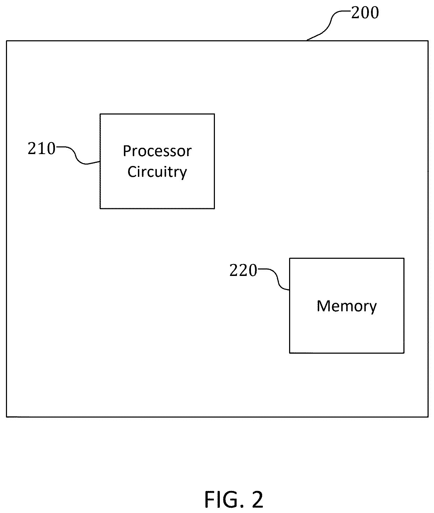

FIG. 2 is a schematic drawing illustrating a device 200 for proximity-aware scanning for connecting to wireless devices. The device 200 may include any of the proximity-aware scanning features discussed above. FIG. 2 may be implemented as a device, a system, a method, and/or a computer readable medium that, based on execution of the instructions, performs the features of the proximity-aware scanning described above. It should be understood that device 200 is only an example, and other configurations may be possible that include, for example, different components or additional components.

Device 200 includes (at least one) processor circuitry 210 coupled to memory 220. Processor circuitry 210 of device 200 is configured to, based on execution of the instructions, detect whether a user is within a predefined proximity of the device. Processor circuitry 210 is also configured to reduce, based on the user detected beyond the predefined proximity of the device, a frequency of a scanning procedure of a wireless communication circuitry. Processor circuitry 210 is also configured to increase, based on the user detected within the predefined proximity of the device, the frequency of the scanning procedure of the wireless communication circuitry.

Furthermore, in addition to or in combination with any of the features described in this or the preceding paragraph with respect to device 200, the frequency of the scanning procedure of the wireless communication circuitry may include a duty cycle of listening for advertisements and/or of transmitting scan requests in a Bluetooth pairing procedure or in a Bluetooth reconnection procedure. Furthermore, in addition to or in combination with any of the features described in this or the preceding paragraph, the scanning procedure may be of an active scan or of a passive scan. Furthermore, in addition to or in combination with any of the features described in this or the preceding paragraph, the duty cycle may be based on a scan interval and/or a scan window size. Furthermore, in addition to or in combination with any of the features described in this or the preceding paragraph, the frequency of the scanning procedure may be reduced to zero based on the user detected beyond the predefined proximity of the device.

Furthermore, in addition to or in combination with any of the features described in this or the preceding two paragraphs with respect to device 200, the scanning procedure may include a Bluetooth pairing procedure or a Bluetooth reconnection procedure. Furthermore, in addition to or in combination with any of the features described in this or the preceding two paragraphs, processor circuitry 210 may be configured to determine the frequency of the scanning procedure based on whether the user is detected within the predefined proximity of the device. Furthermore, in addition to or in combination with any of the features described in this or the preceding two paragraphs, processor circuitry 210 may be configured to determine whether the user is detected within the predefined proximity of the device based on a proximity detection circuit including at least one of a camera-based recognition circuit, a wireless proximity sensing circuit (e.g., Wi-Fi), an ultrasound sensing circuit, or a high accuracy distance measurement function (e.g., HADM of Bluetooth).

Furthermore, in addition to or in combination with any of the features described in this or the preceding three paragraphs with respect to device 200, the proximity detection system may utilize an angle of arrival and/or an angle of departure measurement of a wireless signal of a wireless antenna. Furthermore, in addition to or in combination with any of the features described in this or the preceding three paragraphs, processor circuitry 210 may be configured to determine the frequency of the scanning procedure based on a platform-level power mode. Furthermore, in addition to or in combination with any of the features described in this or the preceding three paragraphs, the platform-level power mode may include a working state, a low-latency-standby sleep state, processor-context-lost sleep state, a suspend-to-random-access-memory sleep state, a suspend-to-disk hibernate state, or a soft-off state. Furthermore, in addition to or in combination with any of the features described in this or the preceding three paragraphs, processor circuitry 210 may be configured to determine the frequency of the scanning procedure based on a platform performance setting that prioritizes other wireless communication traffic over the scanning procedure.

Furthermore, in addition to or in combination with any of the features described in this or the preceding four paragraphs with respect to device 200, processor circuitry 210 may be configured to switch off power to the wireless communication circuitry based on whether the user is detected within the predefined proximity of the device. Furthermore, in addition to or in combination with any of the features described in this or the preceding four paragraphs, processor circuitry 210 configured to detect whether the user is within the predefined proximity of the device may include processor circuitry 210 configured to determine a distance of the user from the device. Furthermore, in addition to or in combination with any of the features described in this or the preceding four paragraphs, the predefined proximity may include a threshold distance of the user from the device. Furthermore, in addition to or in combination with any of the features described in this or the preceding four paragraphs, the threshold distance may be about 1 meter.

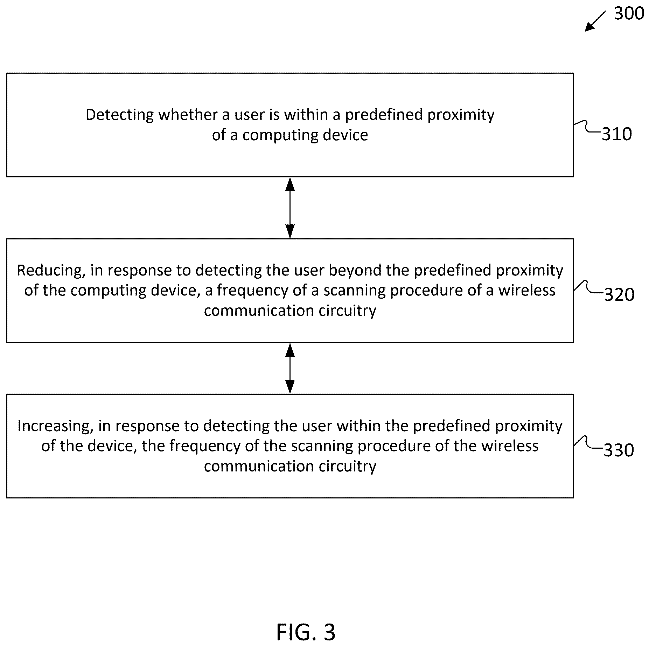

FIG. 3 depicts a schematic flow diagram of a method 300 for proximity-aware scanning for connecting to wireless devices. Method 300 may implement any of the proximity-aware scanning features discussed above and/or with respect to FIGs. 1-2. Method 300 includes, in 310, detecting whether a user is within a predefined proximity 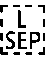 of a computing device. Method 300 also includes, in 320, reducing, in response to detecting the user is beyond the predefined proximity of the computing device, a frequency of a scanning procedure of a wireless communication circuitry. Method 300 also includes, in 330, increasing, in response to detecting the user within the predefined proximity of the device, the frequency of the scanning procedure of the wireless communication circuitry.

In the following, various examples are provided that may include one or more aspects described above with respect to proximity-aware scanning for connecting to wireless devices. The examples provided in relation to the devices may apply also to the described method(s), and vice versa.

Example 1 is a device including a processor circuitry connected to a memory comprising instructions stored thereon, wherein the processor circuitry is configured to, based on the execution of the instructions, detect whether a user is within a predefined proximity of the device. The processor circuitry is also configured to reduce, based on the user beyond the predefined proximity of the device, a frequency of a scanning procedure of a wireless communication circuitry. The processor circuitry is also configured to increase, based on the user within the predefined proximity of the device, the frequency of the scanning procedure of the wireless communication circuitry.

Example 2 is the device of example 1, wherein the frequency of the scanning procedure of the wireless communication circuitry includes a duty cycle of listening for advertisements and/or of transmitting scan requests in a Bluetooth pairing procedure or in a Bluetooth reconnection procedure.

Example 3 is the device of any one of examples 1 to 2, wherein the scanning procedure includes an active scan or a passive scan.

Example 4 is the device of any one of examples 2 to 3, wherein the duty cycle is based on a scan interval and/or a scan window size.

Example 5 is the device of any one of examples 1 to 4, wherein the frequency of the scanning procedure is reduced to zero based on the user beyond the predefined proximity of the device.

Example 6 is the device of any one of examples 1 to 5, wherein the scanning procedure includes a Bluetooth pairing procedure or a Bluetooth reconnection procedure.

Example 7 is the device of any one of examples 1 to 6, wherein the processor circuitry is configured to determine the frequency of the scanning procedure based on whether the user is detected within the predefined proximity of the device.

Example 8 is the device of any one of examples 1 to 7, wherein the processor circuitry is configured to determine whether the user is detected within the predefined proximity of the device based on a proximity detection circuitry including at least one of a camera-based recognition circuit, a wireless proximity sensing circuit (e.g., Wi-Fi), an ultrasound sensing circuit, or a high accuracy distance measurement function (e.g., HADM of Bluetooth).

Example 9 is the device of example 8, wherein the proximity detection circuit utilizes an angle of arrival and/or an angle of departure measurement of a wireless signal of a wireless antenna.

Example 10 is the device of any one of examples 1 to 9, wherein the processor circuitry is configured to determine the frequency of the scanning procedure based on a platform-level power mode.

Example 11 is the device of example 10, wherein the platform-level power mode includes a working state, a low-latency-standby sleep state, processor-context-lost sleep state, a suspend-to-random-access-memory sleep state, a suspend-to-disk hibernate state, or a soft-off state.

Example 12 is the device of any one of examples 1 to 11, wherein the processor circuitry is configured to determine the frequency of the scanning procedure based on a platform performance setting that prioritizes other wireless communication traffic over the scanning procedure.

Example 13 is the device of any one of examples 1 to 12, wherein the processor circuitry is configured to switch off power to the wireless communication circuitry based on whether the user is detected within the predefined proximity of the device.

Example 14 is the device of any one of examples 1 to 13, wherein the processor circuitry configured to detect whether the user is within the predefined proximity of the device includes the processor circuitry configured to determine a distance of the user from the device.

Example 15 is the device of any one of examples 1 to 14, wherein the predefined proximity includes a threshold distance of the user from the device.

Example 16 is the device of example 15, wherein the threshold distance includes about 1 meter.

Example 17 is a method for proximity-aware scanning to connect wireless devices. The method includes detecting whether a user is within a predefined proximity of the device. The method also includes reducing, in response to detecting the user beyond the predefined proximity of the device, a frequency of a scanning procedure of a wireless communication circuitry. The method also includes increasing, in response to detecting the user within the predefined proximity of the device, the frequency of the scanning procedure of the wireless communication circuitry.

Example 18 is the method of example 17, wherein the frequency of the scanning procedure of the wireless communication circuitry includes a duty cycle of listening for advertisements and/or of transmitting scan requests in a Bluetooth pairing procedure or in a Bluetooth reconnection procedure.

Example 19 is the method of any one of examples 17 to 18, wherein the scanning procedure includes an active scan or a passive scan.

Example 20 is the method of any one of examples 18 to 19, wherein the duty cycle is based on a scan interval and/or a scan window size.

Example 21 is the method of any one of examples 17 to 20, wherein the frequency of the scanning procedure is reduced to zero based on the user beyond the predefined proximity of the device.

Example 22 is the method of any one of examples 17 to 21, wherein the scanning procedure includes a Bluetooth pairing procedure or a Bluetooth reconnection procedure.

Example 23 is the method of any one of examples 17 to 22, the method further including determining the frequency of the scanning procedure based on whether the user is detected within the predefined proximity of the device.

Example 24 is the method of any one of examples 17 to 23, the method further including determining whether the user is detected within the predefined proximity of the device based on a proximity detection circuit including at least one of a camera-based recognition circuit, a wireless proximity sensing circuit (e.g., Wi-Fi), an ultrasound sensing circuit, or a high accuracy distance measurement function (e.g., HADM of Bluetooth).

Example 25 is the method of example 24, wherein the proximity detection circuit utilizes an angle of arrival and/or an angle of departure measurement of a wireless signal of a wireless antenna.

Example 26 is the method of any one of examples 17 to 25, the method further including determining the frequency of the scanning procedure based on a platform-level power mode.

Example 27 is the method of example 26, wherein the platform-level power mode includes a working state, a low-latency-standby sleep state, processor-context-lost sleep state, a suspend-to-random-access-memory sleep state, a suspend-to-disk hibernate state, or a soft-off state.

Example 28 is the method of any one of examples 17 to 27, the method further including determining the frequency of the scanning procedure based on a platform performance setting that prioritizes other wireless communication traffic over the scanning procedure.

Example 29 is the method of any one of examples 17 to 28, the method further including switching off power to the wireless communication circuitry based on whether the user is detected within the predefined proximity of the device.

Example 30 is the method of any one of examples 17 to 29, wherein the detecting whether the user is within the predefined proximity of the device includes determining a distance of the user from the device.

Example 31 is the method of any one of examples 17 to 30, wherein the predefined proximity includes a threshold distance of the user from the device.

Example 32 is the method of example 31, wherein the threshold distance is about 1 meter.

Example 33 is a non-transitory computer-readable medium including instructions that, based on execution by one or more processors, cause the one or more processors to detect whether a user is within a predefined proximity of a device. The instructions also cause the one or more processors to reduce, based on the user detected beyond the predefined proximity of the device, a frequency of a scanning procedure of a wireless communication circuitry. The instructions also cause the one or more processors to increase, based on the user detected within the predefined proximity of the device, the frequency of the scanning procedure of the wireless communication circuitry.

Example 34 is the non-transitory computer-readable medium of example 33, wherein the frequency of the scanning procedure of the wireless communication circuitry includes a duty cycle of listening for advertisements and/or of transmitting scan requests in a Bluetooth pairing procedure or in a Bluetooth reconnection procedure.

Example 35 is the non-transitory computer-readable medium of any one of examples 33 to 34, wherein the scanning procedure includes an active scan or a passive scan.

Example 36 is the non-transitory computer-readable medium of any one of examples 34 to 35, wherein the duty cycle is based on a scan interval and/or a scan window size.

Example 37 is the non-transitory computer-readable medium of any one of examples 33 to 36, wherein the frequency of the scanning procedure is reduced to zero based on detection of the user beyond the predefined proximity of the device.

Example 38 is the non-transitory computer-readable medium of any one of examples 33 to 37, wherein the scanning procedure includes a Bluetooth pairing procedure or a Bluetooth reconnection procedure.

Example 39 is the non-transitory computer-readable medium of any one of examples 33 to 38, wherein the instructions also cause the one or more processors to determine the frequency of the scanning procedure based on whether the user is detected within the predefined proximity of the device.

Example 40 is the non-transitory computer-readable medium of any one of examples 33 to 39, wherein the instructions also cause the one or more processors to determine whether the user is detected within the predefined proximity of the device based on a proximity detection circuit including at least one of a camera-based recognition circuit, a wireless proximity sensing circuit (e.g., Wi-Fi), an ultrasound sensing circuit, or a high accuracy distance measurement function (e.g., HADM of Bluetooth).

Example 41 is the non-transitory computer-readable medium of example 40, wherein the proximity detection circuit utilizes an angle of arrival and/or an angle of departure measurement of a wireless signal of a wireless antenna.

Example 42 is the non-transitory computer-readable medium of any one of examples 33 to 41, wherein the instructions also cause the one or more processors to determine the frequency of the scanning procedure based on a platform-level power mode.

Example 43 is the non-transitory computer-readable medium of example 42, wherein the platform-level power mode includes a working state, a low-latency-standby sleep state, processor-context-lost sleep state, a suspend-to-random-access-memory sleep state, a suspend-to-disk hibernate state, or a soft-off state.

Example 44 is the non-transitory computer-readable medium of any one of examples 33 to 43, wherein the instructions also cause the one or more processors to determine the frequency of the scanning procedure based on a platform performance setting that prioritizes other wireless communication traffic over the scanning procedure.

Example 45 is the non-transitory computer-readable medium of any one of examples 33 to 44, wherein the instructions also cause the one or more processors to switch off power to the wireless communication circuitry based on whether the user is detected within the predefined proximity of the device.

Example 46 is the non-transitory computer-readable medium of any one of examples 33 to 45, wherein the instructions that cause the one or more processors to detect whether the user is within the predefined proximity of the device includes that the instructions also cause the one or more processors to determine a distance of the user from the device.

Example 47 is the non-transitory computer-readable medium of any one of examples 33 to 46, wherein the predefined proximity includes a threshold distance of the user from the device.

Example 48 is the non-transitory computer-readable medium of example 47, wherein the threshold distance is about 1 meter.

Example 49 is an apparatus that includes a circuit for detecting whether a user is within a predefined proximity of the apparatus. The apparatus also includes a circuit for reducing, based on the user detected beyond the predefined proximity of the apparatus, a frequency of a scanning procedure of a wireless communication circuitry. The apparatus also includes a circuit for increasing, based on the user detected within the predefined proximity of the apparatus, the frequency of the scanning procedure of the wireless communication circuitry.

Example 50 is the apparatus of example 49, wherein the frequency of the scanning procedure of the wireless communication circuitry includes a duty cycle of listening for advertisements and/or of transmitting scan requests in a Bluetooth pairing procedure or in a Bluetooth reconnection procedure.

Example 51 is the apparatus of any one of examples 49 to 50, wherein the scanning procedure includes an active scan or a passive scan.

Example 52 is the apparatus of any one of examples 50 to 51, wherein the duty cycle is based on a scan interval and/or a scan window size.

Example 53 is the apparatus of any one of examples 49 to 52, wherein the frequency of the scanning procedure is reduced to zero based on the user detected beyond the predefined proximity of the apparatus.

Example 54 is the apparatus of any one of examples 49 to 53, wherein the scanning procedure includes a Bluetooth pairing procedure or a Bluetooth reconnection procedure.

Example 55 is the apparatus of any one of examples 49 to 54, wherein the apparatus further includes a circuit for determining the frequency of the scanning procedure based on whether the user is detected within the predefined proximity of the apparatus.

Example 56 is the apparatus of any one of examples 49 to 55, wherein the apparatus further includes a circuit for determining whether the user is detected within the predefined proximity of the apparatus based on a proximity detection circuit including at least one of a camera-based recognition circuit, a wireless proximity sensing circuit (e.g., Wi-Fi), an ultrasound sensing circuit, or a high accuracy distance measurement function (e.g., HADM of Bluetooth).

Example 57 is the apparatus of example 56, wherein the proximity detection circuit utilizes an angle of arrival and/or an angle of departure measurement of a wireless signal of a wireless antenna.

Example 58 is the apparatus of any one of examples 49 to 57, wherein the apparatus further includes a circuit for determining the frequency of the scanning procedure based on a platform-level power mode.

Example 59 is the apparatus of example 58, wherein the platform-level power mode includes a working state, a low-latency-standby sleep state, processor-context-lost sleep state, a suspend-to-random-access-memory sleep state, a suspend-to-disk hibernate state, or a soft-off state.

Example 60 is the apparatus of any one of examples 49 to 59, wherein the apparatus further includes a circuit for determining the frequency of the scanning procedure based on a platform performance setting that prioritizes other wireless communication traffic over the scanning procedure.

Example 61 is the apparatus of any one of examples 49 to 60, wherein the apparatus further includes a circuit for switching off power to the wireless communication circuitry based on whether the user is detected within the predefined proximity of the apparatus.

Example 62 is the apparatus of any one of examples 49 to 61, wherein the circuit for detecting whether the user is within the predefined proximity of the apparatus includes a circuit for determining a distance of the user from the apparatus.

Example 63 is the apparatus of any one of examples 49 to 62, wherein the predefined proximity includes a threshold distance of the user from the apparatus.

Example 64 is the apparatus of example 63, wherein the threshold distance is about 1 meter.

While the above description has made reference to specific aspects and exemplary embodiments, it should be understood by those skilled in the art that various changes in form and detail may be made thereto without departing from the spirit and scope thereof. The scope of the appended claims and all changes, which come within the meaning and range of equivalency of the claims, are therefore intended to be embraced.

## Claims

1. An apparatus comprising:
a memory comprising instructions stored thereon; and
at least one processor circuitry, that based on execution of the instructions, is configured to:
detect whether a user is within a predefined proximity of the apparatus;
based on the user detected beyond the predefined proximity of the apparatus, reduce a frequency of a scanning procedure of a wireless communication circuitry; and
based on the user detected within the predefined proximity of the apparatus, increase the frequency of the scanning procedure of the wireless communication circuitry.

2. The apparatus of claim 1,
wherein the frequency of the scanning procedure of the wireless communication circuitry comprises a duty cycle of listening for advertisements and/or of transmitting scan requests in a Bluetooth pairing procedure or in a Bluetooth reconnection procedure.

3. The apparatus of any one of claims 1 or 2,
wherein the scanning procedure comprises an active scan or a passive scan;
preferably wherein the duty cycle is based on a scan interval and/or a scan window size.

4. The apparatus of any one of claims 1 to 3,
wherein the frequency of the scanning procedure is reduced to zero based on detection of the user beyond the predefined proximity of the apparatus.

5. The apparatus of any one of claims 1 to 4,
wherein the scanning procedure comprises a Bluetooth pairing procedure or a Bluetooth reconnection procedure.

6. The apparatus of any one of claims 1 to 5,
wherein the at least one processor circuitry is configured to determine the frequency of the scanning procedure based on whether the user is detected within the predefined proximity of the apparatus.

7. The apparatus of any one of claims 1 to 6,
wherein the at least one processor circuitry is configured to determine whether the user is detected within the predefined proximity of the apparatus based on a proximity detection circuit comprising at least one of a camera-based recognition circuit, a wireless proximity sensing circuit, an ultrasound sensing circuit, or a high accuracy distance measurement function;
preferably wherein the proximity detection circuit utilizes an angle of arrival and/or an angle of departure measurement of a wireless signal of a wireless antenna.

8. The apparatus of any one of claims 1 to 7,
wherein the at least one processor circuitry is configured to determine the frequency of the scanning procedure based on a platform-level power mode;
preferably wherein the platform-level power mode comprises a working state, a low-latency-standby sleep state, processor-context-lost sleep state, a suspend-to-random-access-memory sleep state, a suspend-to-disk hibernate state, or a soft-off state.

9. The apparatus of any one of claims 1 to 8,
wherein the at least one processor circuitry is configured to determine the frequency of the scanning procedure based on a platform performance setting that prioritizes other wireless communication traffic over the scanning procedure.

10. The apparatus of any one of claims 1 to 9,
wherein the at least one processor circuitry is configured to switch off power to the wireless communication circuitry based on whether the user is detected within the predefined proximity of the apparatus.

11. The apparatus of any one of claims 1 to 10,
wherein the at least one processor circuitry configured to detect whether the user is within the predefined proximity of the apparatus comprises the at least one processor circuitry configured to determine a distance of the user from the apparatus.

12. The apparatus of any one of claims 1 to 11,
wherein the predefined proximity comprises a threshold distance of the user from the apparatus;
preferably wherein the threshold distance comprises about 1 meter.

13. A method comprising:
detecting whether a user is within a predefined proximity of a device;
reducing, in response to detecting the user beyond the predefined proximity of the device, a frequency of a scanning procedure of a wireless communication circuitry; and
increasing, in response to detecting the user within the predefined proximity of the device, the frequency of the scanning procedure of the wireless communication circuitry.

14. The method of claim 13,
wherein the frequency of the scanning procedure is reduced to zero in response to detecting the user beyond the predefined proximity of the device.

15. A non-transitory computer-readable medium comprising instructions that, based on executing the instructions, cause one or more processors to:
detect whether a user is within a predefined proximity of a computing device;
reduce, in response to the user detected beyond the predefined proximity of the computing device, a frequency of a scanning procedure of a wireless communication circuitry of the computing device; and
increase, in response to the user detected within the predefined proximity of the computing device, the frequency of the scanning procedure of the wireless communication circuitry;
preferably wherein the scanning procedure comprises a Bluetooth pairing or a Bluetooth reconnection.
